# EUROPEAN PATENT SPECIFICATION

(11) **EP 2 476 658 B1**
(45) Date of publication and mention of the grant of the patent: **19.07.2017**
(21) Application number: 12151455.8
(22) Date of filing: 17.01.2012
(51) Int. Cl.: C04B 28/02

(54) **Binding mixture for making highly thermally conductive screeds**
Bindungsmischung zur Herstellung von stark wärmeleitfähigen Belägen
Mélange de liaison pour fabriquer des chapes conductrices hautement thermiques

(30) Priority: 17.01.2011 IT MI20110031
(43) Date of publication of application: 18.07.2012
(73) Proprietor: Cugini S.p.A., 24027 Nembro (IT)
(72) Inventor: Garancini, Luca Mario, 24027 Nembro (IT); Gimenez, Claudia Maria, 24027 Nembro (IT)
(74) Representative: Mauro, Marina Eliana

(56) References cited:
- WO-A1-00/40519
- CH-B1- 698 623
- DE-A1- 10 049 230
- DE-A1-102006 016 941

## Description

### TECHNICAL FIELD OF THE INVENTION

The present invention relates to a binding mixture for making highly thermally conductive screeds.

The present invention originates in the field of building products, in particular those used for making floor screeds.

In particular, the present invention concerns a pre-blended ready-to-use mortar for making highly thermally conductive screeds, suitable for floor heating or cooling systems.

### STATE OF THE ART

The screed is a horizontal constructive element which is used in buildings in order to make flat the underlying concrete sub-layer (the floor slab) and to level the surface, on which the floor is to be placed. Commonly, the floor screed houses the piping and utility cables. The screed acts typically also as thermal and/or sound insulation.

The traditional floor screeds are formed of two main elements, a hydraulic binder, typically cement, and graded aggregate, typically sand. Typically, the floor screed includes about 200-250 kg/m3 of cement and about 1600-1800 kg/m3 of sand.

The mortar for screeds can be prepared by the operator in situ, in construction site or packaged from industrial production, in the form of pre-blended ready-to-use mortar.

Mixing the different constituents or the pre-blended mortar with about 160-180 kg/m³ of water, a mortar of semi-dry consistency is obtained (of the "wet earth" type), which allows to pump and set the mixture in order to form the floor screed, with drying time variable from about 14 to 28 days and with hydraulic shrinkage of about 800 micron/m. The "wet earth" type consistency reduces the cracking risks with respect to the plastic or fluid consistency, however the smaller cohesion between the cement paste and the aggregate, as well as the poor settlement capacity of the mortar (due to its semi-dry consistency) reduce the final density of the screed and, as a result, also its thermal conductivity; therefore, the final thermal performance of the floor heating system is not high.

The floor screed can also contain admixtures, like for example water reducers. The presence of such admixtures allows a reduction of the required content of water up to about 140-160 kg/m³; the so obtained floor screed shows better mechanical characteristics, has a minor hydraulic shrinkage and reduced drying time.

The water reducing admixtures have also a superplasticizer effect, therefore, dosed properly in the mixture, they improve the cohesion between the cement paste and aggregate, thus the screed is more compact with a certain increase of the thermal conductivity.

Generally, screeds having the semi-dry consistency have a poor capacity to transmit heat. However, in some more recent applications the floor screed is required to have also characteristics of higher thermal conductivity. These characteristics are necessary when the screed has floor heating and cooling systems, which require suitable characteristics of heat transmission.

For these particular applications there are known cement mortars, specific for the floor screeds, in which heat conducting elements are dispersed in the form of metallic fibers.

However, the measurements of thermal conductivity taken on these screeds with metallic fibers, available on the market, show low values, equal to about 1,3 W/mK, that can be similar to with the traditional mortar without metallic fibers.

At present, it is needed to have special pre-blended ready-to-use mortars for building industry that are capable of providing a floor screed with high thermal conductivity properties, without jeopardizing the mechanical characteristics thereof, which typically must be at least 20 N/mm2 (after 28 day curing at 20°C and 60% RH, in compliance with UNI EN 13892-2).

DE 10049230 A1 discloses a screed composition comprising up to 50 wt.-% graphite, preferably 5 to 35 wt.-%. Starting from this need, the Applicant has surprisingly discovered that joining specific components in a binding mixture for construction application, a floor screed can be obtained, that combines thermal conductivity properties which are higher with respect to the known products, with a suitable mechanical strength in a single product.

This combination of properties allows obtaining a screed which has excellent mechanical properties and, at the same time, particularly suitable to house the piping of heating or cooling floor systems due to better and homogeneous heat transmission.

### SUMMARY OF THE INVENTION

According to the present invention, a binding mixture is provided for obtaining floor screeds that have high thermal conductivity, comprising cement in a quantity between 13 and 14% by weight, aggregates in a quantity between 82 and 84% by weight, a superplasticizer additive, naphthalene sulphonate based, in a quantity between 0,10 and 0,20%, preferably between 0,14 and 0,16% and graphite characterized in that said graphite has a 90% particle size distribution between 125 and 400 micron and its amount is between 2 and 3% by weight. The use of graphite, having a specific particle size curve and in a proper amount, in combination with the other components of the binding mixture of the invention, allows obtaining a floor screed that has a series of advantages in terms of thermal conductivity and mechanical strength, with respect to the traditional products.

These properties make the binding mixture of the invention particularly suitable for the production of screeds suited to housing heating or cooling floor systems.

Consequently, an aspect of the present invention concerns also the use of a binding mixture of the previously described type for the preparation of a floor screed having thermal conductivity. Such screed preferably has thermal conductivity value of λ ≥ 1,8 W/mk.

According to another aspect of the present invention, a high thermal conductivity screed is provided, obtained by mixing an amount of water with the binding mixture, of the previously described type, between 7 and 15%, more preferably between 9-10% by weight and applying the so obtained mortar to a building substrate.

According to some embodiments, the binding mixture of the invention is mixed with about 140-180 kg/m³ of water for a time suitable to obtain the mortar with a semi-dry consistency ("wet earth" type). The mixing time varies depending on the amount of water added to the pre-blended ready-to-use mortar and typically is included between 1 and 10 minutes, preferably between 2 and 4 minutes.

In one embodiment, the mixing of the pre-blended ready-to-use mortar with water is performed in a mechanical mixer or in a concrete mixer. The right amount of water, added to the mortar for screed, is part of the abilities and knowledge of the operator skilled in the field, and can be varied depending on the needs and conditions, such as the temperature of the environment, the type of substrate, on which the screed is to be placed and the optimization of the drying time.

Typically, the mortar is pumped or distributed manually on a substrate, generally the floor slab or a lightening or insulating layer situated over the floor slab. The drying times are variable, depending on the environment conditions, such as temperature, humidity degree and amount of water added to the mortar. Typically, the drying time is included in the period from 3 to 28 days.

According to an embodiment, the dry mortar has a hydraulic shrinkage between 600 and 1000 micron/m, after 28 days.

The use of the pre-blended ready-to-use mortar according to the invention, allows obtaining a floor screed, which presents a higher thermal conductivity respect to the traditional screeds, which makes it particularly suitable for housing heating or cooling floor systems.

The heat conductive floor screeds obtained by the use of the binding mixture of the invention, have the following further advantages:
- a very uniform heat distribution along the whole surface of the floor screed,
- a general performance increase of the heating/cooling system placed in the floor screed.
- reduction of time necessary to reach regular operation of the heating/cooling system with respect to the standard or self-levelling screeds,

- lower operation temperature of the heating system, with respect to the systems housed in normal screeds,
- the reduction of the handling costs of the heating/cooling system housed in the floor screed.

### DETAILED DESCRIPTION OF THE INVENTION

Natural graphite, which is typically one of the allotropic forms of carbon, is used within the scope of the mixture formulation of the invention. The graphite has a crystal structure, in which the carbon atoms are arranged on the parallel layers made by a lattice of regular hexagons, with one carbon atom on each of the vertices. The presence of a "sea of electrons" between the layers of graphite, caused by the non bonded p orbitals, ensures a high electrical conductivity. Another characteristic of the graphite that derives from its structure is the cleavage of the reticular planes; the planes mutual sliding allows use of the graphite as a solid lubricant or as a pencil lead.

The graphite presents also heat conductivity characteristics; the conductivity is different in various directions, bigger in the direction of the planes and smaller in the perpendicular direction. Due to this property, the graphite is used also in the package of refractory materials, in order to reduce the temperature gradient between the surface exposed to high temperatures and the cold one, so as to reduce the internal tensions and increase the resistance to heat shock and to chipping.

According to an embodiment, the binding mixture of the invention includes the natural graphite with carbon content between 89% and 98%, preferably between 94% and 98%. By way of example, the following Table 1 reports two compositions of type A and B of the graphite present in the formulation of the invention:

**Table 1**

| **Composition %** | | |
|---|---|---|
| | **A** | **B** |
| SiO₂ | 40.1 | 41.6 |
| Al₂O₃ | 14.0 | 16.3 |
| Fe₂O₃ | 14.5 | 13.4 |
| CaO | 17.1 | 15.7 |
| MgO | 7.7 | 5.9 |
| K₂O | 1.7 | 1.2 |
| Na₂O | 0.8 | 1.1 |
| TiO₂ | 0.3 | 0.3 |
| MnO | 0.1 | 0.1 |
| P₂O₅ | 0.1 | 0.1 |

According to the invention, 90% of the graphite A has a particle size distribution between 125 and 400 micron, whereas the graphite B (not according to the invention) has a particle size distribution between 45 and 150 micron.

The use of type A graphite is according to the invention.

In accordance with an embodiment, the binding mixture for floor screeds of the present invention contains a quantity of natural graphite characterized by a thermal conductivity (defined at 25°C on powder pressed at 2.2 g/dm³) advantageously higher than 150 W/mK and preferably higher than 180 W/mk.

In accordance with some embodiments, the graphite of the binding mixture of the invention presents particle size curves of the type reported in the figures illustrated in the following.

### BRIEF DESCRIPTION OF FIGURES

The present invention will be fully understood by reading the following detailed description and the following examples with reference to the enclosed drawings, in which:
Fig. 1 shows the particle size curves of type A, B, C and D graphite.
Fig. 2 shows the theoretical particle size curve of the pre-blended ready-to-use mortar of the invention and the production tests of two industrial samples of Table 10 reported in Example 5.

In accordance with an embodiment of the invention, the graphite present in the formulation of the binding mixture is natural graphite of the TIMREX 50x100 mesh type, with 94-98% carbon content having a particle size distribution between 125 and 400 micron.

The formulation of the binding mixture of the invention includes cement as binding agent. Any kind of cement suitable for the production of floor screeds, as for example Portland cement, can be used within the context of the invention. For example, 42.5 R II/A-L type cement can be used, according to the standards UNI EN 197-1.

The graded aggregate of the binding mixture can be of any kind used in the building industry applications. The typical graded aggregate includes sand, natural or crushed, of sedimentary, igneous or metamorphic origin. For example, crushed limestone rock aggregate constituted by a mixture of different particle size distribution fractions can be used.

In accordance with an embodiment, the graded aggregate has a particle size distribution between 0.1 and 3 mm.

By way of example, an aggregate that can be used in the mixture of the present invention is of calcareous type and presents chemical analysis obtained by XRF, as indicated in the following Table 2.

**Table 2**

| **Composition %** | |
|---|---|
| ***SiO₂*** | 17.67 |
| ***Al₂O₃*** | 1.20 |
| ***Fe₂O₃*** | 0.63 |
| ***CaO*** | 42.96 |
| ***MgO*** | 1.16 |
| ***SO₃*** | 0.21 |
| ***Na₂O*** | < 0.08 |
| ***K₂0*** | 0.44 |
| ***SrO*** | 0.07 |
| ***Mn₂O₃*** | < 0.04 |
| ***P₂O₅*** | 0.04 |
| ***TiO₂*** | 0.06 |
| ***Loss on ignition*** | **35.44** |

The formulation of the binding mixture of the invention includes a superplasticizer admixture in powder, in a quantity suitable to improve the fluidity of the binding mixture.

In the building field, the superplasticizer admixture is referred to also as water reducing admixture since it allows a water reduction for the fresh screed, to for example about 140-160 Kg/m³.

The presence of superplasticizer in the formulation of pre-blended ready-to-use mortar of the invention turned out to be important in order to obtain a proper mechanical strength for the floor screed. In accordance with one embodiment of the invention, it has been discovered that the presence in the formulation of a quantity of superplasticizer (naphthalene sulphonate based) in powder form, between 0.10% and 0.20% and preferably between 0.14% and 0.16% by weight helps to obtain the request mechanical properties of the resultant screed.

In accordance with the invention, a pre-blended ready-to-use mortar is provided, whose formulation contains a quantity of cement between 13 and 14% by weight, a quantity of graded aggregate between 82 and 84% by weight, graphite having a particle size distribution between 40 and 500 micron, preferably between 40 and 400 micron, in a quantity between 2 and 3% by weight and a superplasticizer powder admixture, preferably naphthalene sulphonate based, in a quantity between 0.10 and 0.20% and preferably between 0.14 and 0.16%.

In accordance with some embodiments, the binding mixture can contain other additions such as fillers, set and hardening accelerators or reducers, water retaining admixtures, rheological properties modifying agents and the like.

### EXAMPLES OF THE INVENTION

The following examples are provided as a mere illustration of the present invention and must not be meant as limiting the protective scope as results from the enclosed claims.

### EXAMPLE 1

Formulation of a binding mixture of the invention for obtaining a floor screed having high thermal conductivity.

| Components | |
|---|---|
| Hydraulic binder: 42.5 R II/A-L type cement | 13.50% |
| Aggregate with Ø max 3 mm | 83.35% |
| Type A graphite | 3.00% |
| Naphthalene sulphonate superplasticizer | 0.15% |

Components of the binding mixture:
- Hydraulic binder: 42.5 R II/A-L type cement (in accordance with the standards UNI EN 197-1) coming from the cement factory Italcementi of Calusco d'Adda.
- Graded aggregate: limestone rock coming from the quarry Roveto at Nembro (BG), crushed in various graded fractions, with maximum diameter up to 3 mm. The previous table 2 reports the typical values of the chemical composition determined by the XRF analysis.
- Admixture: naphthalene sulphonate superplasticizer in powder form.
- Mineral material with high thermal conductivity:
   natural graphite of TIMREX 50x100 mesh type with 94-98% carbon content, having a particle size distribution between 125 and 400 micron.

### EXAMPLE 2 (not according to the invention)

Comparative tests have been performed in order to estimate the thermal performance of the floor screeds obtained with the binding mixture of the invention and the screeds obtained with pre-blended ready-to-use mortar of the prior art having heat conducting elements (metal fibers) in their formulation.

The tested samples have been obtained from a pre-blended ready-to-use mortar for standard screed of our normal production (FONDOMIX SC25) with addition of different amounts of both natural graphite with a 94%-98% carbon content having a particle size distribution between 125 and 400 micron (A) and steel lamellar fibers having the length of 20 mm (F).

The tests have been performed in accordance with the European Standard UNI EN 13892 part 1 and 2. Table 3 reports the compositions of the samples with the related tests results.

**Table 3 - Preliminary tests: compositions and characterization of samples.**

| Characteristic | N. | 1 | 2 | 3 | **4** | **5** | 6 |
|---|---|---|---|---|---|---|---|
| | Standard product | Fondomix SC25 | Fondomix SC25 | Fondomix SC25 | **Fondomix SC25** | **Fondomix SC25** | Fondomix SC25 |
| Addition (*) | % | --- | 0.1 F | 0.5 F | **5 A** | **10 A** | --- |
| Water demand | % | 8.5 | 8.5 | 8.5 | **8.5** | **8.5** | 7.5 |
| Consistency | Mm | ND | ND | ND | **ND** | **ND** | ND |
| | | Semi-dry | Semi-dry | Semi-dry | Semi-dry | Semi-dry | Semi-dry |
| Flexural strength after 7 days | N/mm2 | 8.0 | 7.9 | 6.1 | 3.6 | 1.2 | 3.6 |
| Flexural strength after 28 days | N/mm² | 9.2 | 9.2 | 8.6 | **4.1** | **2.1** | 4.7 |
| Compressive strength after 7 days | N/mm² | 35.7 | 40.3 | 32.4 | **10.9** | **4.6** | 17.0 |
| Compressive strength after 28 days | N/mm² | 50.9 | 53.1 | 44.4 | **15.7** | **6.6** | 25.7 |
| Density of hardened specimens after 28 days | Kg/m³ | 2234 | 2318 | 2146 | **2017** | **1888** | 2047 |
| Thermal conductivity (**) | W/mk | 1.62 | 1.61 | 1.67 | **2.15** | **2.49** | 1.57 |

| | | | | | | | |
|---|---|---|---|---|---|---|---|
| ND : not determinable (*) Addition: - A: natural graphite of TIMREX 50x100 mesh type with 94-98% carbon content having a particle size distribution between 125 and 400 micron. Table 1 reports the typical values of the chemical composition. - F: steel lamellar fibers having the length of 20 mm. The competing products available on the market have a fiber content lower than 0.1% (data in column 2) due to the high cost of these fibers. (**) Thermal conductivity: determined with ISOMET instrument of APPLIED PRECISION, allows measurement of the thermal characteristics of the solid state materials by applying a heat flow. The test has been performed on four specimens obtained by cutting, orthogonal to the generatrix of cylindrical samples, with diameter of 120 mm and height of 200 mm, subjected to drying at 40°C for 24 hours after being cut. | | | | | | | |

The results of the tests on the samples without fibers or graphite (samples 1 and 6) have revealed that, with the lowering of the water percentage in the mortars, the cohesion decreases and the entrapped air increases (revealed by the lower mass density) and consequently, the thermal conductivity decreases. This is clear with mortars with semi-dry consistency with such problems of adjustment during their placing.

Analyzing the other results, it is noted that the metallic fibers have not helped significantly to improve the heat flow, although dosed in bigger quantities with respect to the products available on the market (the column 3 has a percentage about 6 times bigger), while the addition of the graphite shows an evident increase of the thermal conductivity, even with a lower mass density (the specific weight of the graphite is lower with respect to that of the other components).

However, a dramatic reduction of the mechanical properties is noticed, since the graphite is soft and can exfoliate easily; practically a screed with these characteristics can not be used.

### EXAMPLE 3

The mechanical properties has been improved by optimizing the formulations of Example 2 with graphite, so as to reach in 28 days the mechanical resistance values provided for a cementitious screed CT F4 class C20 according to UNI EN 13813. This class of a cementitious floor screed is the most commercialized and common on the Italian market and presents the following characteristics:
- C20 for a compressive strength > 20 N/mm²
- F 4 for a flexural strength > 4.0 N/mm²

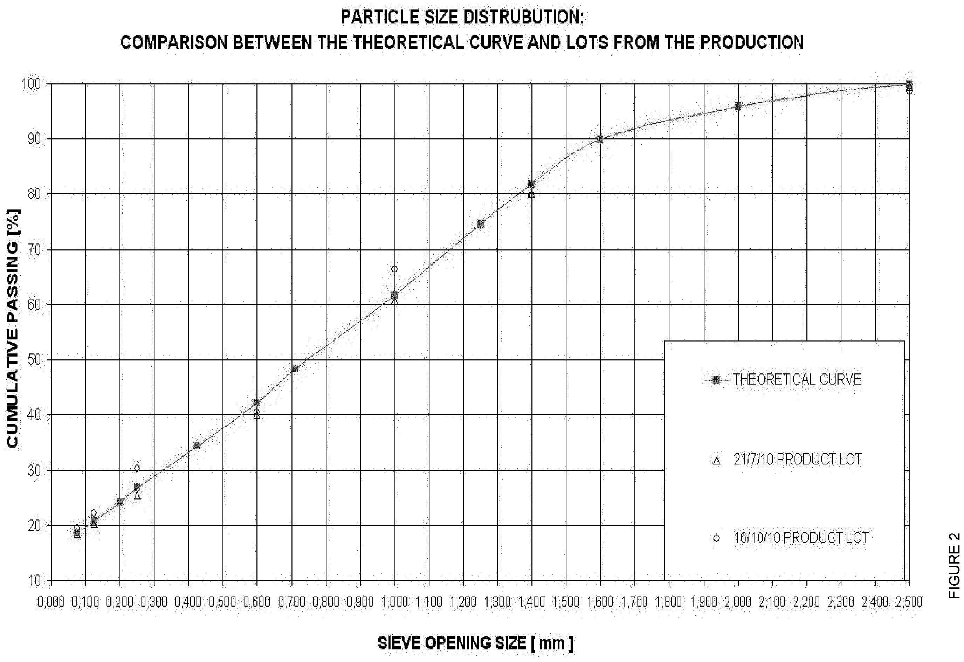

Beginning from a basic formulation of cement-aggregate, related to the sample identified with R (reference), all the other samples have been obtained using different percentages of graphite and applying the following corrections:
- increase of superplasticizer admixture
- increase of cement
- increase of both cement and superplasticizer admixture
- comparison between the two different types of graphite A and B characterized by different particle size curve, (see Figure 2).

Both the graphite and the additional percentage of cement have been measured substituting a part of the finest fraction of the aggregate (fraction 0-0.3 mm) on the reference formulation.

Table 4 reports the samples compositions, expressed as percentages by weight

**Table 4**

| **Components** | **R** | **1** | **2** | **3** | **4** | **5** | **6** | **7** | **8** | **9** |
|---|---|---|---|---|---|---|---|---|---|---|
| Cement | 12.5 | 12.5 | 12.5 | 14.0 | 12.5 | 13.5 | 13.5 | 13.5 | 13.5 | 13.5 |
| Aggregates with max dimension of 3 mm | 87.39 | 82.39 | 82.35 | 80.89 | 83.39 | 82.35 | 82.35 | 82.35 | 83.35 | 83.35 |
| Graphite A | --- | 5.0 | 5.0 | 5.0 | 4.0 | 4.0 | --- | 2.0 | 3 | --- |
| Graphite B | --- | --- | --- | --- | --- | --- | 4.0 | 2.0 | --- | 3 |
| Admixture | 0.11 | 0.11 | 0.15 | 0.11 | 0.11 | 0.15 | 0.15 | 0.15 | 0.15 | 0.15 |
| Water | 8.5 | 8.5 | 8.5 | 8.5 | 8.5 | 9.5 | 9.5 | 9.5 | 9.5 | 9.5 |

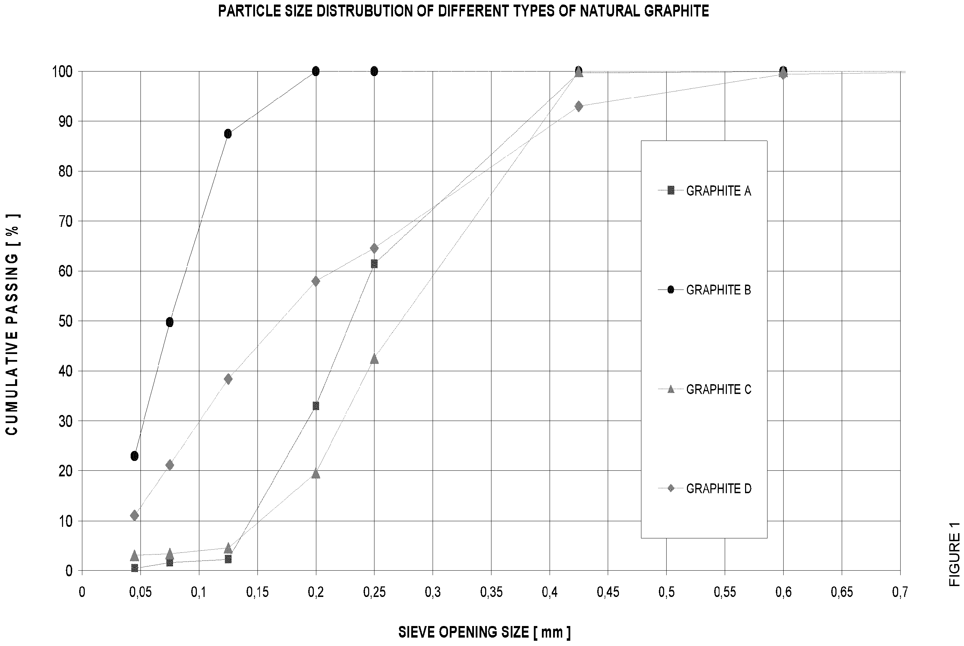

Tests 1 to 6 and 9 are not according to the invention.
- Binder:
   cement type 42.5 R II/A-L (in accordance with the European Standard UNI EN 197-1) coming from the cement factory Italcementi of Calusco d'Adda.
- Aggregate: limestone rock (coming from the quarry Roveto at Nembro), crushed in various graded fractions, with maximum diameter of 3 mm. Table 2 reports the typical values of the chemical composition determined by the XRF analysis.
- Admixture: superplasticizer of the naphthalene sulphonate type in powder form.
- High thermal conductivity component:
   A: natural graphite of TIMREX 50x100 mesh type with 94-98% carbon content having a particle size distribution between 125 and 400 micron.
   B: natural graphite of the TIMREX of the M100 mesh type with the 94-98% carbon content having a particle size distribution between 45 and 150 micron. Table 1 reports the typical values of the chemical composition determined by the XRF analysis and figure 1 report the particle size curves related to the two types of graphite determined by the air jet sieving method (UNI EN 933-10).

The tests have been performed in accordance with the European standards UNI EN 13892 part 1 and 2. Table 5 reports the results of the physical-mechanical characterization of the 10 samples tested in laboratory.

**Table 5 - Physical-mechanical characteristics**

| **Characteristics** | **Measure units** | **R** | **1** | **2** | **3** | **4** | **5** | **6** | **7** | **8** | **9** |
|---|---|---|---|---|---|---|---|---|---|---|---|
| A/C ratio | | 0.68 | 0.68 | 0.68 | 0.61 | 0.68 | 0.70 | 0.70 | 0.70 | 0.70 | 0.70 |
| Consistency - mm | mm | ND Semi-dry | ND Semi-dry | ND Semi-dry | ND Semi-dry | ND Semi-dry | ND Semi-dry | ND Semi-dry | ND Semi-dry | ND Semi-dry | ND Semi-dry |
| Flexural strength after 2 days | N/mm² | 4.4 | 2.1 | 2.3 | 2.4 | 2.6 | 2.8 | 2.7 | 2.8 | 3.6 | 3.4 |
| Flexural strength after 7 days | N/mm² | 4.4 | 2.1 | 2.9 | 3.2 | 2.5 | 4.3 | 3.6 | 3.9 | 4.3 | 3.9 |
| Flexural strength after 28 days | N/mm² | 6.0 | 3.6 | 3.8 | 3.8 | 4.5 | 4.6 | 3.9 | 3.9 | 5.6 | 5.7 |
| Compressive strength after 2 days | N/mm² | 16.5 | 7.0 | 7.5 | 7.9 | 8.2 | 10.4 | 9.5 | 9.5 | 12.7 | 12.7 |
| Compressive strength after 7 days | N/mm² | 21.5 | 8.6 | 10.3 | 10.5 | 11.6 | 13.1 | 10.7 | 13.4 | 16.8 | 15.9 |
| Compressive strength after 28 days | N/mm² | 27.8 | 12.8 | 14.6 | 14.1 | 14.9 | 19.8 | 16.6 | 17.4 | 24.0 | 23.0 |
| Density of hardened specimens after 28 days | Kg/m³ | 1990 | 1810 | 1830 | 1860 | 1860 | 1910 | 1880 | 1870 | 1940 | 1980 |
| DME after 28 days | N/mm² | 2301 0 | 1357 0 | 1401 5 | 1419 8 | 1489 0 | 1990 8 | 1794 6 | 1830 8 | 2141 5 | 2285 3 |

| | | | | | | | | | | | |
|---|---|---|---|---|---|---|---|---|---|---|---|
| ND: not determinable DME: dynamic elastic modulus | | | | | | | | | | | |

The samples from 1 to 7 contain different quantities of superplasticizer admixture, cement and graphite (4 and 5%). All these samples still show, however, limited mechanical properties: all the compressive strength values after 28 days are lower than 20 N/mm².

Only with a graphite content lower than 3% (both A or B types), in the formulations 8 and 9 the compressive strength meets the requirements of class CT C20 F4 for cement screeds (in accordance with the UNI EN 13813).

By comparing the two types of graphite it has become evident that the mortar with the more coarse graphite A (particle size distribution between 125 and 400 micron) was more cohesive, with higher density, higher DME and mechanical strength. It is then preferable to use this type of graphite.

### EXAMPLE 4

### Thermal conductivity test and further physical-mechanical tests

Three samples have been tested for the thermal characterization of the floor screed obtained with a binding mixture having high thermal conductivity, whose formulation is reported in the example 1:
- sample 1, as reference without graphite (white),
- sample 2, formulation of the example 1 (with 3% of graphite)
- sample 3 (not according to the invention), formulation of the example 1 with addition of 3% of graphite (with 6% of total graphite).

The following table 6 reports the related formulations:

**Table 6**

| **Composition %** | **Reference (blank test)** | **Sample 2** | **Sample 3** |
|---|---|---|---|
| Cement | 13.5 | 13.5 | 13.5 |
| Aggregates with max Ø of 3 mm | 86.35 | 83.35 | 80.35 |
| Graphite A | --- | 3.0 | 6.0 |
| Admixture | 0.15 | 0.15 | 0.15 |

The powder blends of the samples have been prepared in laboratory and afterwards the mortars of about 10 kg have been made, using 9% of water to obtain a fresh mortar having a good cohesion. The fresh mortar has been obtained with a Hobart A 200 mixer, with a capacity of 20 litres, with the following working time: 90 seconds of mixing, followed by 45 seconds of stop and by other 45 seconds of mixing.

Two specimens of 500x500x50 mm with flat and parallel surfaces have been prepared for each sample for the thermal conductivity tests.

The specimens have been kept for 14 days in an environment at 20°C and RH > 90% + 14 days in an environment at 20°C and RH 65% + 14 days in an environment at 20°C and RH 50%, so as to reduce gradually the residual humidity of the screed in order to prepare it to the thermal conductivity test.

The test for defining the thermal conductivity has been performed by the Giordano Institute of Bellaria (RN), in accordance with the European standard UNI EN 12664 according to which the thermal resistance is determined by means of guarded hot plate. The laboratory is SINAL accredited (Italian System for Test Laboratories Accreditation) for this test method.

The samples have been previously rectified and dried at 40°C up to a constant mass, while the test has been performed at 10°C. The results have been reported in the following Table 7.

**Table 7 - Results of the thermal conductivity tests performed by the Giordano Institute**

| **Measurements** | **Measure units** | **Reference (blank test)** | **Sample 2** | **Sample 3** |
|---|---|---|---|---|
| Specimen density | Kg/m³ | 2011 | 2050 | 1981 |
| Thermal conductivity at 10°C(λ10) | W/mk | 1.39 (+/-0.08) | 1.78 (+/-0.11) | 2.10 (+/-0.14) |

In order to complete the characterization, the three samples have been tested by the mechanical flexural and compressive strength tests, in accordance with the UNI EN 13892 part 1 and 2.

The specimens have been conditioned according to the rule requirements:
- 2 days in the steel mould, up to 7 days at 20°C RH > 90% and the remaining - 21 days at 20°C and RH 65%.

The results of the mechanical characterization of the samples are reported in Table 8.

**Table 8 - physical-mechanical properties**

| **Measurements** | **Measure units** | **Reference (blank test)** | **Sample 2** | **Sample 3** |
|---|---|---|---|---|
| Water demand | % | 9.0 | 9.0 | 9.0 |
| Consistency | mm | ND | ND | ND |
| | | Dry | Dry | Dry |
| Flexural strength after 7 days | N/mm² | 4.9 | 3.8 | 2.7 |
| Flexural strength after 28 days | N/mm² | 8.5 | 6.1 | 3.5 |
| Compressive strength after 7 days | N/mm² | 23.8 | 16.2 | 8.4 |
| Compressive strength after 28 days | N/mm² | 32.7 | 22.0 | 11.9 |
| Density of hardened specimens after 28 days | kg/m³ | 2009 | 1910 | 1770 |
| DME after 28 days | N/mm² | 21030 | 18140 | 12700 |

Various 400x400x40 mm specimens have been prepared with the sample 1 (blank test) and the sample 2, in order to check the tensile adhesion between the plane surface of the specimens with cementitious adhesive for tiles classified as C2, in accordance with the European standard UNI EN 12004. The tensile adhesion strength has been measured by the method described in UNI EN 1348. As reference, the tests with the same adhesive have been performed by application on the concrete slab substrate, expected by the UNI EN 1323, as indicated by the standard UNI EN 1348 in paragraph 5.3 for tensile adhesion test.

The tests have been performed after maturation in conditioned environment at 23°C, in order to define the conditions of initial strength and after soaking in water:
- maturation conditions for initial tensile strength: after keeping for 28 days at 23°C RH 50%;
- maturation conditions for tensile strength after soaking in water: 7 days at 23°C RH 50% and then immersion in water at 20°C for 21 days.

The results of the tensile adhesion strength tests with cementitious adhesives are reported in table 9.

Table 9 - Results of the tensile adhesion strength tests UNI EN 1348 on different supports.

**Table 9**

| Measurements | Measure units | Support: LSC in accordance with EN 1323 | Support: Reference (blank test) | Support: Sample 2 |
|---|---|---|---|---|
| Adhesive water demand | % | 30 | 30 | 30 |
| Initial tensile strength | N/mm² | 1.74 | 1.53 | 1.75 |
| Failure patterns | --- | Adhesive Failure AF-T type between tile and adhesive | Adhesive Failure AF-T type between tile and adhesive | Adhesive Failure AF-T type between tile and adhesive |
| Tensile strength after water immersion | N/mm² | 1.01 | 1.06 | 1.06 |
| Failure patterns | --- | Adhesive Failure AF-T type between tile and adhesive | Adhesive Failure AF-T type between tile and adhesive | Adhesive Failure AF-T type between tile and adhesive |
| Bond strength by pull of after curing 28 days at 23°C RH 50% | N/mm² | 2.55 | 2.52 | 2.03 |
| Bond strength by pull of after curing 28 days in water 20°C. | N/mm² | 1.98 | 2.37 | 1.90 |

In the adhesion tests according to UNI EN 1348 neither adhesive detachment from the supports nor the supports breaking have occurred.

The measurements of bond strength by pull-off on the various supports have been performed on the opposite surface of the specimens used for the tensile adhesion strength tests of the various floor screeds. Cuts having diameter of 50 mm have been made on this surface by a corer and metallic plates have been glued there to by epoxy resin so as to perform the pull-off tests. The tests have been performed on the concrete slab substrates expected by the EN 1323, on the sample 1 (blank test) and on the sample 2. The results of these tests have been reported in the Table 9.

The results of tensile adhesion and pull-off tests allowed to show a very good performance of the screed of the sample 2, whose composition has been reported in Example 1, as support for obtaining pavements with tiles or other types of covering (stone, parquet, linoleum, etc.). The presence of the graphite does not modify considerably the mechanical properties of the adhesives for the normally used tiles.

### EXAMPLE 5

### Check of the characteristics of the floor screed produced industrially with the binding mixture

Industrial production of sample 2 has been carried out twice and the physical-mechanical properties have been measured.

**Table 10 reports the mechanical properties of the two industrial products.**

| | Measure units | Production I | Production II |
|---|---|---|---|
| Water demand | % | 8.5 | 8.5 |
| Consistency | mm | ND Semi-dry | ND Semi-dry |
| Density of fresh mortar | kg/m³ | 1819 | 1721 |
| Flexural strength after 7 days | N/mm² | 3.3 | 3.0 |
| Flexural strength after 28 days | N/mm² | 5.4 | 4.8 |
| Compressive strength after 7 days | N/mm² | 14.0 | 13.5 |
| Compressive strength after 28 days | N/mm² | 21.7 | 21.0 |
| Density of hardened specimens after 28 days | kg/m³ | 1877 | 1850 |
| DME 28 days | N/mm² | 18050 | 17500 |
| Hydraulic shrinkage after 28 days (curing at 23°C and RH 50%) | Micron/m | --- | 788 |
| Weight variation due to humidity loss after 28 days (curing at 23°C and RH 50%) | % | --- | -4.4 |

The collected values are in line with the data obtained on the samples made in laboratory.

A test, using the material obtained in the two industrial productions, has been performed in a construction site where a screed with a floor heating system has been made. The fresh mortar is easily pumpable and workable. Even some weeks after its application, it did not show cracking phenomena and its surface was smooth and compact.

### EXAMPLE 6

Table 11 reports the performance characteristics of the floor screed obtained beginning from the binder mixture of the Example 1.

**Table 11**

| **BINDER MIXTURE OF THE EXAMPLE 1** | |
|---|---|
| Water demand | 8-9% |
| Consistency | Semi-dry |
| Compressive strength after 7 days | >13.0 N/mm² |
| Flexural strength after 28 days | >4.5 N/mm² |
| Compressive strength after 28 days | >21.0 N/mm² |
| Density of the hardened mortar after 28 days | >1850 kg/m³ |
| DME (dynamic modulus of elasticity) after 28 days | >17000 N/mm² |
| Hydraulic shrinkage after 28 days micron/m (curing at 23°C and RH 50%) | < 800 micron/m |
| Mass variation after 28 days (curing at 23°C and RH 50%) | 4.5 % |
| Thermal conductivity at 10°C (λ10) | ≥1.8 W/mK |

### EXAMPLE 7

The following graphite have been tested in order to check possible variations of the physical and mechanical properties of the screed obtained with binding mixtures containing other types of natural graphite:
- C: Natural graphite from Graphit Kropfmühl type AG FLN 94 D - with 94.0% carbon content
- D: Natural graphite from Graphit Kropfmühl type AG ABL 87/90 - with 89.6% carbon content

The two graphite have been used to obtain binding mixtures with the same composition reported in example 1 (with 3% graphite content) and compared with the binding mixture obtained with the TIMREX type A graphite with carbon content over 94%.

Table 12 reports the particle size distribution and bulk density of the different types of graphite.

**Table 12**

| CUMULATIVE PERCENT PASSING | | | |
|---|---|---|---|
| Sieve opening size mm | GRAPHITE A TIMREX | GRAPHITE C AG FLN 94 D | GRAPHITE D AG ABL 87/90 |
| 0.045 | 0.5 | 3.1 | 11.1 |
| 0.075 | 1.7 | 3.4 | 21.2 |
| 0.125 | 2.3 | 4.6 | 38.4 |
| 0.200 | 33.0 | 19.6 | 58.0 |
| 0.250 | 61.4 | 42.6 | 64.6 |
| 0.425 | 99.7 | 100.0 | 93.0 |
| 0.600 | 100.0 | 100.0 | 99.4 |
| 0.710 | 100.0 | 100.0 | 99.8 |
| 1.000 | 100.0 | 100.0 | 100.0 |
| Bulk density kg/l | 0.71 | 0.54 | 0.78 |

Table 13 reports the physical and mechanical characteristics of the binding mixtures with the different samples of graphite.

**Table 13**

| Characteristics | Measure units | GRAPHITE A | GRAPHITE C | GRAPHITE D |
|---|---|---|---|---|
| Water (*) | % | 9.5 | 9.5 | 10.0 |
| Consistency | | Semi-dry | Semi dry | Semi dry |
| Flexural strength after 7 days | N/mm² | 4.8 | 3.8 | 5.3 |
| Flexural strength after 28 days | N/mm² | 5.6 | 5.5 | 7.2 |
| Compressive strength after 7 days | N/mm² | 14.3 | 11.5 | 19.9 |
| Compressive strength after 28 days | N/mm² | 27.2 | 20.9 | 29.8 |
| Density of specimens after 28 days | kg/m³ | 2017 | 1990 | 2148 |
| Dynamic elastic modulus after 28 days | N/mm² | 25054 | 21999 | 31631 |
| Thermal conductivity (**) | W/mK | 1.78 | 2.34 | 2.01 |

| | | | | |
|---|---|---|---|---|
| (*) The water percentage was adjusted so as to obtain the same consistency for all the fresh mortars (**) The thermal conductivity has been determined with the ISOMET instrument of APPLIED PRECISION | | | | |

Analyzing the results, it is possible to draw the following observations: lower carbon content in the graphite does not show considerable effects neither on the physical nor on the mechanical properties of the screed. The significant improvement of the thermal conductivity and the reduction of the mechanical properties of the sample with graphite C can be ascribed to the bigger volume occupied by this type of graphite that has a bulk density lower than the other two ones.

Consequently, on the basis of these results, it has been decided to produce a binding mixture with the graphite volume being equal (see example 8).

### EXAMPLE 8

A binding mixture has been obtained using graphite C with the same volume occupied by the mixture containing graphite A.

The graphite A volume in the binding mixture of the example 1 is equals to 4.24 litres every 100 kg of the mixture (3kg : 0.71 kg/l = 4.23 l). On the basis of the bulk density of the graphite C and of the volume occupied by the graphite A, it has been possible to calculate (0.54 kg/l * 4.23 l ≅ 2.3 kg) that the same volume is occupied by the 2.3% by weight of graphite. The missing quantity of material (0.7%) is substituted by the fine fraction of the aggregate (0-0,3mm fraction).

The table 14 reports the physical and mechanical properties of the screed obtained with the new binding mixture.

| Characteristics | Measure units | EXAMPLE 1 FORMULATION WITH 2.3% OF GRAPHITE C |
|---|---|---|
| Water % | % | 9.0 |
| Consistency | | Semi-dry |
| Flexural strength after 7 days | N/mm² | 3.7 |
| Flexural strength after 28 days | N/mm² | 5.4 |
| Compressive strength after 7 days | N/mm² | 15.7 |
| Compressive strength after 28 days | N/mm² | 23.8 |
| Density of specimens after 28 days | kg/m³ | 1994 |
| Dynamic elastic modulus after 28 days | N/mm² | 22788 |
| Thermal conductivity W/mK (**) | W/mK | 2.04 |

| | | |
|---|---|---|
| (*) The water percentage is adjusted so as to obtain the same consistency of the fresh mortar (**) The thermal conductivity has been determined with the ISOMET instrument of APPLIED PRECISION | | |

Analyzing the results, it is possible to draw the following observations: though having content by weight of graphite lower, the so obtained screed has shown very good thermal conductivity and performance similar to the screed obtained with the binding mixture reported in the example 1.

It can be supposed that the binding mixture of the example 1 can be obtained, with the same physical-mechanical characteristics, also with still lower contents of graphite types characterized by bulk densities lower than 0.5 kg/l. For example, using very fine graphite with bulk density of 0.23 kg/l, it would have to be measured at 1% in order to occupy the same volume of the binding mixture of the example 1.

## Claims

1. Binding mixture for obtaining screeds, comprising cement in a quantity between 13 and 14% by weight, aggregates in a quantity between 82 and 84% by weight, a superplasticizer additive, naphthalene sulphonate based, in a quantity between 0,10 and 0,20%, preferably between 0,14 and 0,16% and graphite **characterized in that** said graphite has a 90% particle size distribution between 125 and 400 micron and its amount is between 2 and 3% by weight.

2. Binding mixture as claimed in claim 1, **characterized in that** said graphite has, preferably, a carbon level higher than 90%.

3. Binding mixture as claimed in any of the claims 1-2, **characterized in that** said aggregates comprise sands and/or gravels, preferably limestone based and preferably with a maximum particle size of 3 mm.

4. Binding mixture according to claim 3, in which the graphite content is equal to 3%.

5. Binding mixture as claimed in any of the claims 1-3, **characterized in that** it has the form of a fresh mortar, comprising water, preferably in a quantity between 7 and 15% by weight, more preferably between 9 and 10% by weight.

6. Use of a binding mixture as claimed in any of the claims 1-5 for the preparation of a floor screed.

7. A screed made by using a binding mixture as claimed in claim 5 and applying the obtained mortar on a building substrate.

## Patentansprüche

1. Eine Bindemischung zum Erhalten von Estrichen, beinhaltend Zement in einer Menge zwischen 13 und 14 Gew.-%, Aggregate in einer Menge zwischen 82 und 84 Gew.-%, ein Fließmitteladditiv auf der Basis von Naphthalinsulfonat in einer Menge zwischen 0,10 und 0,20 %, vorzugsweise zwischen 0,14 und 0,16 %, und Graphit, **dadurch gekennzeichnet, dass** der Graphit eine Partikelgrößenverteilung von 90 % zwischen 125 und 400 Mikrometern aufweist und seine Menge zwischen 2 und 3 Gew.-% beträgt.

2. Bindemischung gemäß Anspruch 1, **dadurch gekennzeichnet, dass** der Graphit vorzugsweise einen Kohlenstoffgehalt von mehr als 90 % aufweist.

3. Bindemischung gemäß einem der Ansprüche 1-2, **dadurch gekennzeichnet, dass** die Aggregate Sande und/oder Kies, vorzugsweise auf der Basis von Kalkstein und vorzugsweise mit einer maximalen Partikelgröße von 3 mm, beinhalten.

4. Bindemischung gemäß Anspruch 3, wobei der Graphitgehalt gleich 3 % ist.

5. Bindemischung gemäß einem der Ansprüche 1-3, **dadurch gekennzeichnet, dass** sie die Form eines frischen Mörtels aufweist, der vorzugsweise in einer Menge zwischen 7 und 15 Gew.-%, besonders bevorzugt zwischen 9 und 10 Gew.-%, Wasser beinhaltet.

6. Die Verwendung einer Bindemischung gemäß einem der Ansprüche 1-5 zum Herstellen eines Bodenestrichs.

7. Ein Estrich, der unter Verwendung einer Bindemischung gemäß Anspruch 5 und durch Aufbringen des erhaltenen Mörtels auf ein Bausubstrat gefertigt wird.

## Revendications

1. Mélange de liaison destiné à obtenir des chapes, comprenant du ciment dans une quantité comprise entre 13 et 14 % en poids, des agrégats dans une quantité comprise entre 82 et 84 % en poids, un adjuvant superplastifiant, à base de naphtalène sulfonate, dans une quantité comprise entre 0,10 et 0,20 %, de préférence entre 0,14 et 0,16 %, et du graphite **caractérisé en ce que** ledit graphite a une distribution de tailles de particules à 90 % comprise entre 125 et 400 microns et qu'il est dans une quantité comprise entre 2 et 3 % en poids.

2. Mélange de liaison tel que revendiqué dans la revendication 1, **caractérisé en ce que** ledit graphite a, de préférence, un niveau de carbone supérieur à 90 %.

3. Mélange de liaison tel que revendiqué dans n'importe lesquelles des revendications 1 à 2, **caractérisé en ce que** lesdits agrégats comprennent des sables et/ou des graviers, de préférence à base de calcaire et de préférence avec une taille de particules maximale de 3 mm.

4. Mélange de liaison selon la revendication 3, dans lequel la teneur en graphite est égale à 3 %.

5. Mélange de liaison tel que revendiqué dans n'importe lesquelles des revendications 1 à 3, **caractérisé en ce qu'**il est sous la forme d'un mortier frais, comprenant de l'eau, de préférence dans une quantité comprise entre 7 et 15 % en poids, de préférence encore entre 9 et 10 % en poids.

6. Utilisation d'un mélange de liaison tel que revendiqué dans n'importe lesquelles des revendications 1 à 5 pour la préparation d'une chape pour sol.

7. Une chape faite en utilisant un mélange de liaison tel que revendiqué dans la revendication 5 et en appliquant le mortier obtenu sur un substrat de construction.
